# FASCICULE DE BREVET EUROPEEN

(11) **EP 2 523 584 B1**
(45) Date de publication et mention de la délivrance du brevet: **23.03.2016**
(21) Numéro de dépôt: 11704269.7
(22) Date de dépôt: 10.01.2011
(51) Int. Cl.: A47J 27/08

(54) **JOINT A AFFAISSEMENT VERTICAL, ET AUTOCUISEUR POURVU D'UN TEL JOINT**
VERTIKAL NIEDERDRÜCKBARE DICHTUNG UND MIT SOLCH EINER DICHTUNG AUSGESTATTETER SCHNELLKOCHTOPF
VERTICALLY DEPRESSIBLE SEAL AND PRESSURE-COOKER PROVIDED WITH SUCH A SEAL

(30) Priorité: 11.01.2010 FR 1050144
(43) Date de publication de la demande: 21.11.2012
(73) Titulaire: SEB S.A., 69130 Ecully (FR)
(72) Inventeur: CHAMEROY, Eric, F-21260 Veronnes (FR); CARTIGNY, Michel, Pierre, F-21310 Mirebeau (FR)
(74) Mandataire: Martin, Didier Roland Valéry
(86) Numéro de dépôt international: PCT/FR2011/050035
(87) Numéro de publication internationale: WO 2011/083284

(56) Documents cités:
- WO-A1-2008/011768
- FR-A3- 2 811 398
- US-A- 2 399 115
- US-A- 2 598 220
- US-A- 2 600 714

## Description

### DOMAINE TECHNIQUE

La présente invention se rapporte au domaine technique général des appareils de cuisson d'aliments sous pression dans une atmosphère chargée en vapeur, tels que les autocuiseurs.

La présente invention se rapporte plus particulièrement aux joints d'étanchéité destinés à être mis en place dans de tels appareils pour assurer, en fonctionnement, l'étanchéité entre l'intérieur et l'extérieur de l'appareil.

La présente invention concerne ainsi un joint d'étanchéité pour appareil de cuisson d'aliments sous pression, ledit appareil comprenant :
- une cuve ainsi qu'un couvercle destiné à être rapporté sur ladite cuve pour définir une enceinte de cuisson,
- des moyens de verrouillage permettant de maintenir le couvercle sur la cuve, lesdits moyens de verrouillage comprenant au moins un premier organe de verrouillage solidaire du couvercle et au moins un second organe de verrouillage solidaire de la cuve, le premier organe de verrouillage étant destiné à être engagé sous le second organe de verrouillage, après que le couvercle a été posé sur la cuve, pour assurer le maintien dudit couvercle sur ladite cuve,
le joint d'étanchéité étant conçu pour être interposé entre le couvercle et la cuve afin d'assurer l'étanchéité de l'enceinte de cuisson.

La présente invention concerne également un appareil de cuisson d'aliments sous pression équipé ou susceptible d'être équipé d'un joint d'étanchéité conforme à l'invention.

### TECHNIQUE ANTERIEURE

Quel que soit le type d'appareil de cuisson d'aliments sous pression concerné, il est déjà connu d'avoir recours à un joint d'étanchéité, notamment en matériau élastomère, pour assurer l'étanchéité entre l'intérieur et l'extérieur de l'enceinte de cuisson lors de la montée en pression de l'appareil et pendant toute la durée du cycle de cuisson.

A cet effet, on utilise généralement un joint de type corde, ou encore un joint à lèvres, qui est disposé dans le couvercle de telle sorte que, lors de la mise en place du couvercle sur la cuve de l'appareil, ledit joint puisse venir en appui contre la cuve et assurer l'étanchéité de l'appareil.

En règle générale, la mise en place du couvercle sur la cuve conduit à une mise en compression du joint, laquelle est nécessaire pour que ce dernier assure sa fonction d'étanchéité.

Or, bien que les joints connus donnent généralement satisfaction, ils souffrent parfois de certains inconvénients.

En effet, la présence de tels joints peut, dans certains cas, gêner la pose ou le verrouillage du couvercle sur la cuve dans la mesure où la mise en compression desdits joints peut opposer une résistance mécanique à ces opérations de mise en place et de verrouillage.

En particulier, on observe qu'il est généralement nécessaire de comprimer le joint selon un mouvement vertical descendant, en appuyant sur le couvercle, puis, tout en maintenant cet effort de compression verticale, de manoeuvrer le couvercle ou encore un moyen de commande situé sur ledit couvercle pour actionner des organes mécaniques de verrouillage, tels que mâchoires, rampes, étrier ou autres, afin de fixer ledit couvercle sur la cuve.

Or, cette fermeture « *à force* » de l'appareil peut exposer le joint, et, dans une moindre mesure, les organes de verrouillage, à des contraintes excessives susceptibles de provoquer leur dégradation par une usure prématurée, voire une déformation, ce qui est bien entendu préjudiciable à l'étanchéité de l'appareil ainsi qu'à la sécurité de l'utilisateur.

Par ailleurs, la mise en compression du joint ainsi que les frottements exercés par ledit joint contre les parois de la cuve ou du couvercle opposent une résistance mécanique à la mise en place du couvercle sur la cuve, ce qui réduit le confort d'utilisation de l'appareil.

Une telle fermeture sous contrainte augmente également le risque que l'utilisateur renverse accidentellement l'appareil et son contenu au moment de la fermeture, en particulier si celle-ci intervient alors que l'appareil est disposé sur un support étroit ou glissant tel qu'un plan de travail ou un fourneau.

En outre, la compression souvent inégale du joint lors de la fermeture peut conduire à un mauvais positionnement horizontal du couvercle par rapport à la cuve, et par conséquent à un mauvais fonctionnement des organes de verrouillage, ce qui nécessite parfois que l'utilisateur effectue plusieurs tentatives de mise en place du couvercle avant d'obtenir un placement satisfaisant de ce dernier.

On connait également le brevet US-2,399,115 qui décrit un appareil de cuisson conforme au préambule de la revendication 1.

### EXPOSE DE L'INVENTION

Les objets assignés à l'invention visent donc à remédier aux inconvénients susmentionnés et à proposer un nouveau joint d'étanchéité pour appareil de cuisson d'aliments sous pression qui, tout en assurant une bonne étanchéité de l'enceinte de cuisson, permette une mise en place et un verrouillage du couvercle sur la cuve qui soient particulièrement simples, intuitifs et sûrs.

Un autre objet assigné à l'invention vise à proposer un nouveau joint d'étanchéité dont le montage soit particulièrement facile.

Un autre objet assigné à l'invention vise à proposer un nouveau joint d'étanchéité qui présente une structure simple et robuste, et qui soit peu onéreux à fabriquer.

Un autre objet assigné à l'invention vise à proposer un nouveau joint d'étanchéité qui confère à l'appareil de cuisson une fiabilité, une longévité et une sécurité de fonctionnement accrues.

Un autre objet assigné à l'invention vise à proposer un nouvel appareil de cuisson d'aliments sous pression dont la fermeture soit particulièrement facile, intuitive, sûre et ne nécessite que peu d'efforts.

Un autre objet assigné à l'invention vise à proposer un nouvel appareil de cuisson d'aliments sous pression qui présente une bonne ergonomie et qui offre d'excellentes garanties de sécurité lors de sa manipulation.

Les objets assignés à l'invention sont atteints à l'aide d'un appareil de cuisson conforme à l'objet de la revendication 1.

Les objets assignés à l'invention sont également atteints à l'aide d'un appareil de cuisson d'aliments sous pression caractérisé en ce qu'il est pourvu d'un joint d'étanchéité conforme à l'invention.

### DESCRIPTIF SOMMAIRE DES DESSINS

D'autres objectifs, caractéristiques et avantages de l'invention apparaîtront plus en détails à la lecture de la description qui suit, ainsi qu'à l'aide des dessins annexés, fournis à titre purement illustratif et non limitatif, parmi lesquels :
- La figure 1 illustre, selon une vue tridimensionnelle de dessus, une variante de réalisation de joint d'étanchéité conforme à l'invention.
- La figure 2 illustre, selon une vue tridimensionnelle de dessous, le joint d'étanchéité représenté sur la figure 1.
- La figure 3 illustre, selon une vue d'ensemble avec coupe partielle, une variante de réalisation d'autocuiseur conforme à l'invention au moment où le couvercle accoste la cuve de telle sorte que le joint d'étanchéité entre en contact avec cette dernière.
- La figure 4 illustre, selon une vue en coupe, la configuration de l'appareil représenté sur la figure 3 lorsque le couvercle est posé sur la cuve et relâché par l'utilisateur, de sorte à y reposer sous son propre poids.
- La figure 5 illustre, selon une vue en coupe, la configuration de l'appareil de cuisson représenté sur les figures 3 et 4 après que les organes de verrouillage ont été enclenchés de sorte à verrouiller le couvercle sur la cuve.
- La figure 6 illustre, selon une vue en coupe, l'appareil représenté sur les figures 3 à 5 après que le couvercle a été verrouillé sur la cuve et lorsque la pression s'est élevée dans l'enceinte de cuisson.
- Les figures 7, 8, 9, 10 illustrent, selon des vues schématiques latérales en coupe, le fonctionnement d'une variante de réalisation d'appareil de cuisson conforme à l'invention pourvu d'organes de verrouillage de type baïonnette, suivant les étapes d'accostage, de relâchement du couvercle, d'engagement des organes de verrouillage et de montée en pression de l'appareil.

### MEILLEURE MANIERE DE REALISER L'INVENTION

La présente invention se rapporte à un appareil de cuisson 1 d'aliments sous pression, préférentiellement du genre autocuiseur à usage domestique, ledit appareil comprenant une cuve 2 ainsi qu'un couvercle 3 qui est destiné à être rapporté sur ladite cuve 2, et plus préférentiellement à être posé sur le rebord supérieur 7 de ladite cuve, pour définir une enceinte de cuisson 4.

Par commodité de description, on considérera dans ce qui suit que l'appareil de cuisson 1 est placé sur un plan de travail P plan et horizontal, et que le couvercle 3 est superposé sensiblement à l'aplomb de la cuve 2 selon la direction verticale (ZZ').

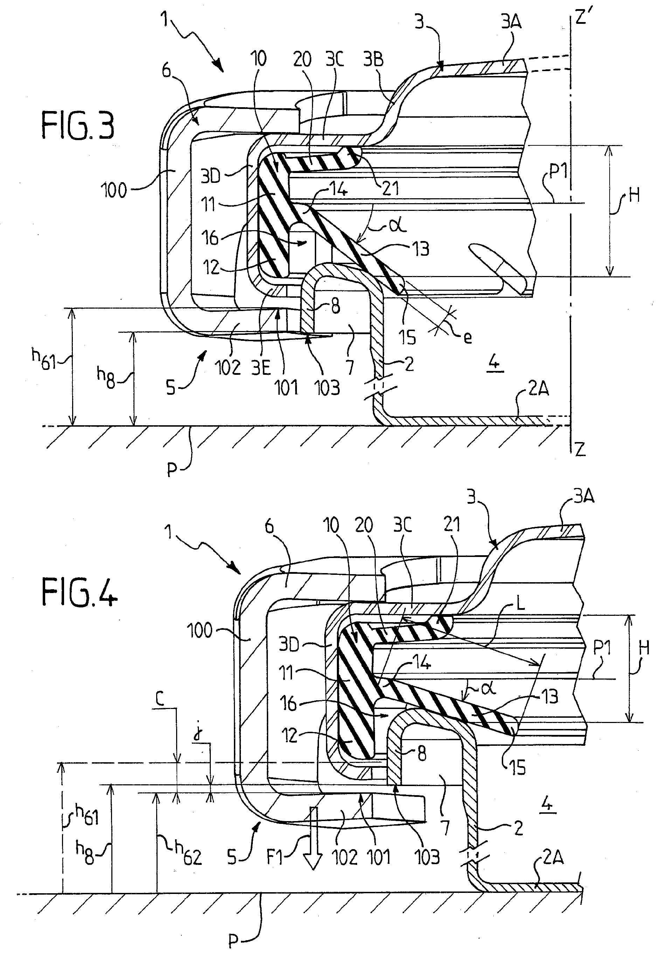

Le couvercle 3 pourra être pourvu d'une zone centrale 3A bombée et surélevée qui se poursuit radialement vers l'extérieur du couvercle 3 par un flanc tombé 3B, lui-même suivi par un plat annulaire 3C qui se poursuit par un bord annulaire tombé 3D, préférentiellement sensiblement plat et vertical, ce dernier se terminant par une extrémité terminale 3E roulée intérieurement, tel que cela est le cas sur la variante de réalisation correspondant aux figures 3 à 6.

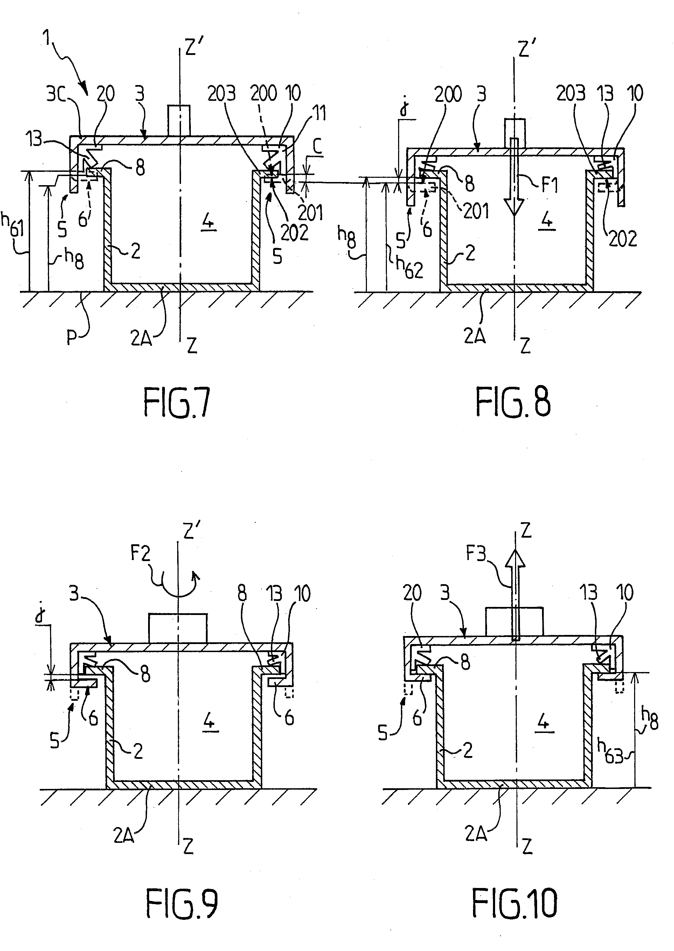

Bien entendu, le couvercle 3 pourra présenter tout diamètre ou toute autre forme de réalisation, et notamment être sensiblement plat, c'est-à-dire présenter une zone centrale 3A non bombée, sans flanc tombé 3B, et se confondant directement avec le plat annulaire 3C, tel que cela est le cas sur la variante de réalisation, correspondant schématiquement aux figures 7 à 10.

Le rebord supérieur 7 de la cuve 2 peut avantageusement comporter un bord tombé, roulé ou embouti à partir de l'extrémité supérieure de la cuve. Le dôme formé par ledit rebord supérieur 7 peut notamment être sensiblement horizontal, ou, de préférence, légèrement incliné vers l'intérieur de la cuve, tel que cela est illustré sur les figures 3 à 6.

Le couvercle et la cuve seront avantageusement réalisés dans un matériau rigide, de préférence métallique, apte à supporter la chaleur et les contraintes de la cuisson sous pression.

De manière connue, l'appareil 1 comprend également des moyens de verrouillage 5 qui permettent de maintenir le couvercle sur la cuve et plus particulièrement d'éviter la séparation du couvercle et de la cuve, et a *fortiori,* l'expulsion du couvercle, lorsque l'enceinte de cuisson 4 se trouve sous pression de fonctionnement.

A cet effet, lesdits moyens de verrouillage 5 comprennent au moins un premier organe de verrouillage 6 qui est solidaire du couvercle 3 et au moins un second organe de verrouillage 8 solidaire de la cuve 2, le premier organe de verrouillage 6 étant destiné à être engagé sous le second organe de verrouillage 8, après que le couvercle 3 a été posé sur la cuve 2, pour assurer le maintien dudit couvercle sur ladite cuve.

De préférence, l'appareil de cuisson 1 comportera ainsi une pluralité de premiers organes de verrouillage 6 et une pluralité de seconds organes de verrouillage 8 correspondants répartis, de préférence régulièrement, sur le pourtour du couvercle et de la cuve respectivement, afin d'assurer une fixation équilibrée et stable dudit couvercle sur ladite cuve.

Lesdits moyens de verrouillage 5 peuvent se présenter sous différentes formes sans que cela ne constitue une restriction de l'invention, dès lors qu'ils permettent d'assurer alternativement le verrouillage et le déverrouillage du couvercle 3 sur la cuve 2, et qu'ils comprennent à cet effet un premier organe de verrouillage 6 dont une portion est apte à venir en prise sur et contre la portion inférieure d'un second organe de verrouillage 8.

En particulier, selon une variante de réalisation qui correspond aux figures 3 à 6, lesdits moyens de verrouillage 5 seront de préférence formés par un système de mâchoires, comprenant deux mâchoires diamétralement opposées et montées mobiles au moins selon une composante radiale sur le couvercle 3, le premier moyen de verrouillage correspondant à une mâchoire 6 et le second organe de verrouillage 8 correspondant au rebord supérieur 7 de la cuve.

Selon une autre variante de réalisation, telle que schématisée sur les figures 7, 8, 9 et 10, les moyens de verrouillage 5 sont du type à baïonnette, le premier organe de verrouillage 6 étant formé par une pluralité de rampes de couvercle, tandis que le second organe de verrouillage 8 est formé par une pluralité de rampes de cuve correspondantes.

Bien entendu, il n'est pas exclu de mettre en oeuvre d'autres moyens de verrouillage 5, par exemple à étrier ou à segments, ou tout autre dispositif équivalent faisant intervenir des loquets radiaux solidaires du couvercle et destinés à être engagés à travers des oeillets ménagés dans les bords de la cuve.

Ainsi, l'appareil de cuisson 1 conforme à l'invention peut être pourvu :
- soit de moyens de verrouillage 5 à mâchoires 100, le premier organe de verrouillage 6 étant formé par la face supérieure 101 du bord inférieur rentrant 102 d'une mâchoire 100, et le second d'organe de verrouillage 8 étant formé par la face inférieure 103 du rebord de cuve 7 ou encore d'une rampe prévue à cet effet, tel que cela est représenté sur les figures 3 à 6
- soit de moyens de verrouillage à baïonnette, le premier organe de verrouillage 6 étant formé par la face supérieure 200 de tenons ou de rampes de couvercle 201 et le second organe de verrouillage 8 étant formé par la face inférieure 202 de rampes de cuve 203, tel que cela est représenté sur la figure 8,
- soit encore de moyens de verrouillage 5 à étrier (non représentés), le premier organe de verrouillage 6 étant formé par la face supérieure de chaque extrémité de l'étrier, et le second organe de verrouillage 8 étant formé par la face inférieure d'une oreille de fixation sous laquelle l'extrémité de l'étrier peut être engagée.

Par ailleurs, l'appareil de cuisson 1 conforme à l'invention est pourvu d'un joint d'étanchéité 10 qui est conçu pour être interposé entre le couvercle 3 et la cuve 2 afin d'assurer l'étanchéité de l'enceinte de cuisson 4, en conditions normales de fonctionnement, et plus particulièrement lorsque ladite enceinte de cuisson 4 est remplie de vapeur d'eau à une surpression sensiblement comprise entre 1 et 200 kPa et une température de l'ordre de 100 °C à 135 °C.

Selon une caractéristique importante de l'invention, ledit joint d'étanchéité 10 est conçu pour, lorsque le couvercle 3 accoste la cuve 2, venir tout d'abord au contact simultané dudit couvercle 3 et de ladite cuve 2 alors que le premier organe de verrouillage 6 se trouve à une première altitude h₆₁ supérieure ou égale à l'altitude h₈ du second organe de verrouillage 8, tel que cela est illustré sur les figures 3 et 7, puis s'affaisser sous le seul poids du couvercle 3 de manière suffisante pour amener le premier organe de verrouillage 6 à une seconde altitude h₆₂ qui est inférieure à l'altitude h₈ du second organe de verrouillage 8.

Par « *altitude* » on désigne la distance des éléments considérés par rapport à un repère fixe attaché au sol, et plus particulièrement la distance mesurée selon l'axe vertical (ZZ') entre lesdits éléments et le plan de travail P sur lequel repose le fond de la cuve 2A.

De façon particulièrement avantageuse, le joint d'étanchéité 10 conforme à l'invention est donc agencé et dimensionné de telle sorte qu'en coopérant d'une part avec le couvercle 3 qui exerce sur lui la simple action de son poids, et d'autre part avec la cuve 2 qui forme une butée de retenue s'opposant à la chute dudit couvercle, il assure automatiquement un positionnement du premier organe de verrouillage 6 par rapport au second organe de verrouillage 8 avec un jeu vertical fonctionnel j qui permet l'engagement ou l'insertion sans heurt ni frottement dudit premier organe de verrouillage 6 sous le second organe de verrouillage 8.

Ainsi, le seul fait de poser le couvercle 3 sur la cuve 2 et de lâcher ledit couvercle permet d'assurer un positionnement vertical tel que la manoeuvre ultérieure des moyens de verrouillage 5, et notamment le déplacement du premier organe de verrouillage 6 par rapport au second organe de verrouillage 8 en vue de la fermeture du récipient, se fait librement et sans forcer, quasiment sans rencontrer aucune résistance, ce qui facilite l'utilisation de l'appareil 1 et la rend plus sûre.

En particulier, l'utilisateur peut ainsi actionner les moyens de verrouillage 5 sans avoir à exercer une quelconque pression verticale descendante additionnelle sur le couvercle, ce qui d'une part évite d'endommager le joint par une contrainte d'écrasement excessive de ce dernier, mais également limite les risques d'une mauvaise manoeuvre de l'appareil de cuisson 1, et en particulier de renversement de celui-ci.

De surcroît, une telle conception du joint 10 et de l'appareil 1 garantit le cas échéant à l'utilisateur que l'ensemble des premiers organes de verrouillage 6 sont directement disposés convenablement et prêts à être enclenchés sous les seconds organes de verrouillage 8, quel que soit le nombre et la répartition desdits organes de verrouillage 6, 8 sur le pourtour du couvercle et de la cuve, sans qu'il soit nécessaire de se préoccuper de légères variations d'assiette qui pourraient affecter le couvercle 3 lorsque celui-ci est posé sur la cuve.

En effet, lorsque les moyens de verrouillage sont repartis autour de l'appareil, le joint d'étanchéité 10 permet l'affaissement simultané de l'ensemble des premiers organes de verrouillage 6 sous leurs seconds organes de verrouillage 8 respectifs.

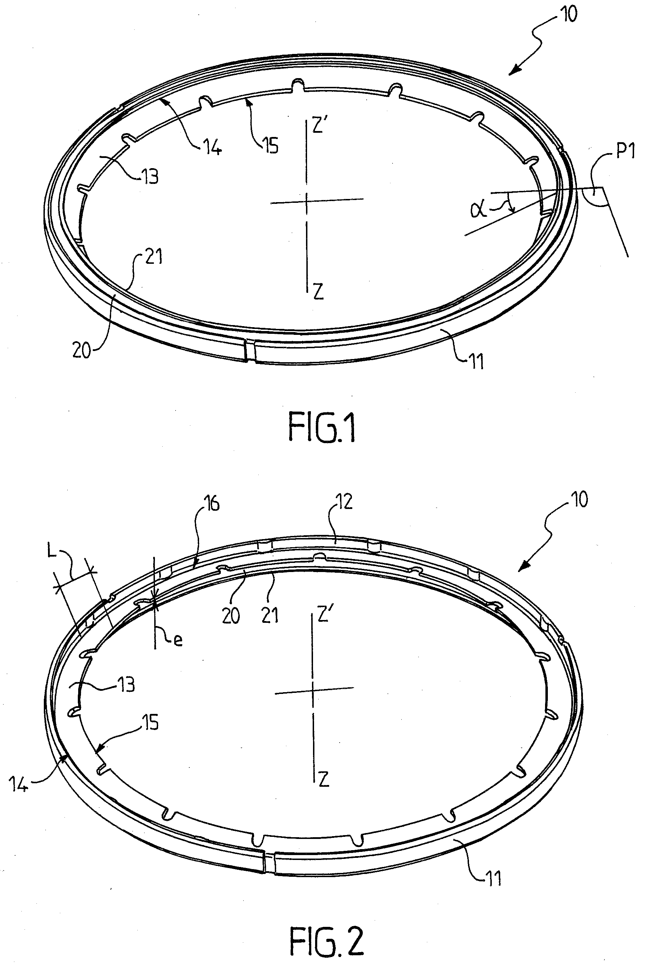

Une variante de réalisation d'un joint d'étanchéité 10 conforme à l'invention est notamment représentée sur les figures 1 et 2, et sa mise en place au sein de l'appareil 1 illustrée sur les figures 3 à 6.

De façon préférentielle, ledit joint d'étanchéité est agencé pour coiffer le rebord supérieur 7 de la cuve, c'est-à-dire de sorte à chevaucher ledit rebord supérieur 7 entre l'intérieur de la cuve et l'extérieur de la cuve, ce qui améliore sa stabilité et peut en outre contribuer au centrage automatique du couvercle sur la cuve.

A cet effet, tel que cela est illustré sur les figures 1 à 6, le joint d'étanchéité 10 peut avantageusement être pourvu d'un talon 11, de préférence périphérique, lequel peut avantageusement se prolonger par une excroissance de centrage 12 sensiblement verticale qui est destinée à venir s'intercaler entre la partie latérale externe du rebord de cuve 7 et la face latérale interne du couvercle 3, et plus particulièrement du bord tombé 3D, afin de garantir le centrage du couvercle 3 sur la cuve 2.

En outre, l'appareil 1 est de préférence conçu pour permettre un montage et un maintien du joint dans le couvercle 3, y compris lorsque ledit couvercle est séparé de la cuve. A cet effet, le plat annulaire 3C définit de préférence avec le bord tombé 3D et l'extrémité terminale roulée 3E une gorge annulaire dans laquelle est logé le joint d'étanchéité 10, et plus particulièrement son talon 11.

Avantageusement, le joint d'étanchéité 10 est conçu pour être pris verticalement en sandwich entre le couvercle 3 et la cuve 2, et plus particulièrement être pincé entre le plat annulaire 3 qui le surplombe et l'extrémité haute du rebord supérieur 7 de cuve qui le retient, afin de former une sorte d'entretoise élastique apte à se déformer par tassement ou écrasement sous le poids du couvercle 3.

A cet effet, ledit joint d'étanchéité 10 comprend de préférence au moins une première lèvre 13 flexible, qui fait saillie à partir du talon 11, et dont la déformation permet l'affaissement dudit joint 10 sous le poids du couvercle 3.

En d'autres termes, ladite première lèvre 13, qui est de préférence agencée pour venir au contact du bord supérieur 7 de la cuve, est conçue pour être suffisamment souple pour absorber au moins une partie, de préférence la majorité, voire la totalité de la déformation nécessaire pour permettre au joint 10, lorsqu'il est soumis au poids du couvercle 3, de réduire sa dimension d'interposition H afin de permettre au premier organe de verrouillage 6 de passer sous le second organe de verrouillage 8.

Par « *dimension d'interposition H* », on désigne l'encombrement vertical que le joint d'étanchéité 10 oppose au rapprochement du couvercle 3 et du bord supérieur 7 de la cuve 2, et plus particulièrement la distance d'écartement entre le bord supérieur de la cuve 7 et le plat annulaire 3C du couvercle 3 telle que la détermine l'épaisseur apparente dudit joint à cet endroit.

Avantageusement, tel que cela est illustré notamment sur les figures 3 et 4, la compression verticale du joint qui s'opère spontanément sous l'effet du poids du couvercle se produit par flexion de la première lèvre 13.

De façon particulièrement préférentielle, tel que cela est illustré notamment sur les figures 1 à 6, la première lèvre 13 flexible forme une jupe souple qui fait saillie depuis le talon 11 périphérique vers l'intérieur du joint 10.

Ainsi, ladite première lèvre 13 possède donc au moins une composante d'extension radiale centripète entre la racine 14 qui la relie au talon 11 et son extrémité libre 15.

Avantageusement, ladite racine 14 forme une sorte de charnière par rapport à laquelle la jupe souple s'articule pour agir comme une lame-ressort qui assure la suspension élastique du couvercle 3 par rapport à la cuve 2.

De préférence, le joint d'étanchéité 10 conforme à l'invention présente par ailleurs une forme sensiblement circulaire, ses constituants, et notamment le talon 11 et la première lèvre 13, présentant de préférence sensiblement une géométrie de révolution par rapport à l'axe vertical (ZZ').

Bien entendu, l'invention n'est nullement limitée à une forme particulière de joint, ce dernier pouvant être adapté à toute forme particulière d'appareil de cuisson 1, et plus particulièrement de rebord de cuve 7, et notamment présenter une forme géométrique générale sensiblement ovale, carrée, ou de tout autre type approprié.

Avantageusement, la jupe souple 13 vient au contact de l'appareil de cuisson, et de préférence de la cuve 2, à la manière d'une couronne élastique continue qui vient créer une zone de contact étanche sensiblement annulaire sur tout le pourtour supérieur de la cuve 2, ce qui permet d'assurer une excellente étanchéité de l'enceinte de cuisson 4 en compensant au besoin certaines imperfections de l'état de surface du rebord de cuve 7 ou d'éventuels écarts de positionnement du joint 10 liés aux tolérances de fabrication ou d'assemblage de l'appareil 1.

Bien entendu, l'homme du métier sera à même d'apprécier l'épaisseur e de la première lèvre 13, en fonction du matériau employé pour fabriquer le joint, afin de lui conférer la souplesse nécessaire pour permettre au premier organe de verrouillage 6 de franchir le seuil vertical formé par le second organe de verrouillage 8, en fonction du poids du couvercle 3.

A titre préférentiel, ladite épaisseur e sera sensiblement comprise entre 1 mm et 3 mm, et de préférence voisine de 1,8 mm.

De façon particulièrement préférentielle, la lèvre 13 présentera en outre une épaisseur e sensiblement constante depuis sa racine 14 jusqu'à son extrémité libre 15 interne.

De préférence, la lèvre 13 s'étendra de façon sensiblement rectiligne entre sa racine 14 et son extrémité libre 15, en définissant ainsi des faces supérieures et inférieures sensiblement planes et de préférence sensiblement parallèles entre elles.

Par ailleurs, la longueur L de ladite première lèvre 13, mesurée entre sa racine 14 et son extrémité libre 15 opposé, sera déterminée en fonction notamment des dimensions relatives de la cuve 2 et du couvercle 3, et plus particulièrement de celles du rebord de cuve 7 ou du bord périphérique 3A du couvercle, mais également de l'élasticité que l'on souhaite conférer au joint d'étanchéité 10.

A titre d'exemple, et notamment pour la gamme d'épaisseurs susmentionnée, ladite longueur L sera sensiblement comprise entre 5 mm et 15 mm, et de préférence voisine de 13 mm.

De préférence, la première lèvre 13 présente, au moins lorsque le joint 10 se trouve au repos, une structure sensiblement plane qui est inclinée, vers le bas sur les figures 1 et 3 à 6, d'un angle d'ouverture α sensiblement compris entre 20 degrés et 50 degrés, et préférentiellement voisin de 35 degrés, par rapport au plan horizontal du joint P1, lui-même sensiblement parallèle au plan de travail P.

De préférence, le joint 10 est dimensionné de sorte à conserver également un angle d'ouverture α non nul, c'est-à-dire une déviation de la première lèvre 13 par rapport au plan horizontal du joint P1, de préférence sensiblement compris entre 10 degrés et 30 degrés lorsqu'il se trouve en charge, c'est-à-dire lorsqu'il est soumis au poids du couvercle avant la montée en pression de l'appareil.

Avantageusement, ledit angle d'ouverture confère d'une part à la première lèvre 13 son effet ressort lorsqu'elle aborde le rebord de cuve 7, mais permet en outre à ladite première lèvre 13 de définir, en combinaison avec l'excroissance de centrage 12 et le talon 11, une zone de dégagement 16 de section sensiblement évasée dans laquelle vient se loger le rebord de cuve 7 lorsque ce dernier entre en contact avec la surface inférieure de ladite première lèvre 13.

Selon l'invention, le joint 10 peut donc être pourvu d'une zone de dégagement 16 formant un renfoncement, qui se présente de préférence sous la forme d'une rainure annulaire qui s'ouvre vers le bas, par exemple sensiblement en « U » ou en « V », renfoncement dans le creux duquel pénètre le rebord supérieur 7 de la cuve.

Avantageusement, ce dégagement 16 confère un caractère auto-centreur au joint d'étanchéité 10, et par conséquent au couvercle 3, et permet à ce dernier de venir coiffer la cuve en recouvrant sensiblement le rebord supérieur 7 de façon particulièrement stable, précise et reproductible. En particulier, un tel agencement assure automatiquement et immédiatement le centrage du couvercle 3, un certain maintien latéral transverse du joint 10 et dudit couvercle 3 par rapport à la cuve 2, ainsi qu'une définition et un maintien angulaire (en tangage et en roulis) d'une assiette du couvercle adaptée au verrouillage de ce dernier.

De préférence, le couvercle 3 possède une masse sensiblement comprise entre 1 kg et 3 kg, ce qui correspond à un poids de l'ordre de 10 N à 30 N. Bien entendu, ces valeurs ne sont nullement limitatives, l'homme du métier étant à même de dimensionner le joint 10 ou tout autre élément de l'appareil de cuisson 1 selon la destination et la contenance souhaitée de ce dernier.

De préférence, la course verticale utile C autorisée par le joint d'étanchéité 10, c'est-à-dire la différence entre la première altitude h₆₁ du premier organe de verrouillage 6 lorsque le joint d'étanchéité 10 se trouve sensiblement au repos et la seconde altitude h₆₂ dudit premier organe de verrouillage 6 lorsque le joint d'étanchéité 10 est soumis à la seule contrainte du poids du couvercle 3 est sensiblement comprise entre 2 mm et 8 mm, et préférentiellement voisine de 5,5 mm.

De préférence, le jeu fonctionnel j résultant de l'affaissement du joint 10, et plus particulièrement la distance verticale minimale séparant la face d'appui supérieure du premier organe de verrouillage 6 de la face d'appui inférieure du second organe de verrouillage 8 correspondant est sensiblement compris entre 1 mm et 3 mm.

De surcroît, la course verticale C autorisée par ledit joint d'étanchéité 10 est de préférence telle qu'elle correspond à une proportion d'affaissement vertical du joint, c'est-à-dire à un rapport entre la dimension d'interposition H dudit joint lorsque ce dernier est affaissé sous le poids du couvercle, tel que cela est illustré sur la figure 4, et cette même dimension d'interposition H lorsque ledit joint se trouve au repos, tel que cela est illustré sur la figure 3, qui est sensiblement comprise entre 0,50 et 0,80, et de préférence voisine de 0,65 (soit un affaissement de l'ordre du tiers).

De préférence, le joint d'étanchéité 10 conforme à l'invention comporte une seconde lèvre 20 qui fait saillie à partir du même talon 11 que la première lèvre 13 et qui présente une rigidité à la déformation verticale plus élevée que la première lèvre, c'est-à-dire une raideur verticale apparente plus élevée que cette dernière.

Ladite première lèvre peut donc constituer de préférence l'unique organe de déformation permettant l'affaissement fonctionnel du joint.

De façon préférentielle, cette seconde lèvre 20 forme une lèvre supérieure destinée à venir prendre appui contre le plat annulaire 3C du couvercle 3, de préférence au niveau d'un bourrelet terminal 21, ce qui assure une étanchéité renforcée entre ledit couvercle 3 et le joint 10.

De préférence, ladite seconde lèvre 20 est pleine et montée sensiblement en opposition par rapport à la première lèvre 13, de telle sorte que le joint présente une section transverse sensiblement divergente en « V ».

Le joint 10 conforme à l'invention présente ainsi de préférence une structure sensiblement asymétrique comprenant une première lèvre 13 souple et une seconde lèvre 20 plus rigide superposée à ladite première lèvre 13, et de préférence plus courte que cette dernière.

Avantageusement, cette structure asymétrique permet au joint d'adopter un comportement différent selon qu'il est monté à l'endroit ou à l'envers dans le couvercle, dans la mesure notamment où il présente une résistance à la compression, et donc à l'enfoncement vertical du couvercle sur la cuve, bien plus élevée lorsqu'il est monté à l'envers, de telle sorte que sa seconde lèvre 20 vient en appui contre le rebord supérieur de la cuve 7, que quand il est monté à l'endroit, dans le sens approprié à son fonctionnement normal.

Ainsi, si un utilisateur venait à monter à l'envers le joint d'étanchéité 10, le comportement anormal de l'autocuiseur à la fermeture permettrait d'alerter ledit utilisateur sur la nécessité de replacer convenablement ledit joint.

De façon particulièrement avantageuse, le joint d'étanchéité 10 conforme à l'invention est formé d'un seul tenant dans un matériau élastomère, et de préférence en silicone.

Le fonctionnement d'un appareil de cuisson 1 conforme à l'invention va maintenant être décrit, en référence préférentielle d'une part à une première variante de réalisation représentée sur les figures 3 à 6, laquelle possède des moyens de verrouillage à mâchoires, et d'autre part à une seconde variante de réalisation correspondant aux figures 7 à 10 possédant un système de verrouillage à baïonnette.

Initialement, la cuve 2 repose sur le plan de travail P, le couvercle 3 étant séparé et garni du joint d'étanchéité 10, lequel est avantageusement inséré dans la gorge annulaire de ce dernier, le dos du talon 11 venant en appui contre le bord tombé 3D tandis que le bourrelet 21 de la lèvre supérieure 20 vient en appui contre le plat annulaire 3C, ce dernier formant un épaulement constituant une butée de retenue verticale à l'encontre dudit joint 10.

L'utilisateur saisit alors le couvercle 3 et le rapporte sur la cuve 2 selon un mouvement d'approche sensiblement vertical et descendant.

Ce faisant, il fait progresser le couvercle jusqu'à ce que la première lèvre 13 vienne au contact du rebord supérieur 7 de la cuve, le joint touchant ainsi à la fois la cuve et le couvercle sensiblement sans être contraint, ni a *fortiori* écrasé, tel que cela est illustré sur la figure 3.

Tant que le couvercle est retenu par l'utilisateur, le joint 10 conserve sensiblement sa forme au repos, tel que cela est illustré sur les figures 3 et 7, le premier organe de verrouillage 6, et plus particulièrement la face supérieure 101 de la mâchoire 102 ou la face supérieure 200 de la rampe de couvercle 201, se trouvant à une première altitude h₆₁ supérieure ou égale à celle du second organe de verrouillage 8, en l'occurrence la face inférieure 103 du rebord de cuve 7 sur la variante illustrée à la figure 3, ou la face inférieure 202 de la rampe de cuve 203 illustrée sur la figure 7.

Avantageusement, on remarquera que l'étanchéité de l'enceinte de cuisson 4 est assurée dès que la première lèvre 13 vient se poser contre la face intérieure du rebord supérieur de cuve 7 en formant une couronne d'étanchéité sensiblement annulaire.

Ainsi, la création de l'étanchéité et la mise en oeuvre du guidage du couvercle peuvent intervenir particulièrement tôt lors de la descente du couvercle 3 sur la cuve 2, sans gêner la mise en place dudit couvercle. Étanchéité et guidage peuvent en outre se voir renforcés ensuite par l'affaissement du joint 10. La fermeture de l'appareil 1 est donc particulièrement fiable, reproductible et intuitive.

En outre, le joint 10 peut avantageusement former un tampon amortisseur qui évite que le couvercle 2 et le rebord supérieur 7 de la cuve ne s'entrechoquent.

Dans cette position de premier contact avec la cuve, et tant qu'il retient le couvercle, l'utilisateur ne peut toutefois pas provoquer directement la fermeture des moyens de verrouillage 5, puisque le second organe de verrouillage 8 forme un obstacle mécanique au déplacement correspondant du premier organe de verrouillage 6.

Il suffit alors à l'utilisateur de relâcher le couvercle, de telle sorte que celui-ci poursuive sa descente verticale à l'encontre du joint d'étanchéité 10, par l'intermédiaire duquel il se trouve en quelque sorte librement suspendu de manière « *flottante* » au-dessus de la cuve 2, tel que cela est illustré sur les figures 4 et 8.

En effet, en cessant de compenser le poids du couvercle 3, l'utilisateur permet à ce dernier d'exercer, du simple fait de son poids, une contrainte de compression naturelle, sensiblement prédéterminée et reproductible, sur le joint d'étanchéité 10, laquelle provoque spontanément la déformation élastique dudit joint, et plus particulièrement, pour l'essentiel, de la première lèvre 13.

Cet affaissement du joint s'accompagne d'un déplacement contrôlé du couvercle 3 qui s'enfonce davantage vers, sinon pénètre dans, la cuve 2 selon un mouvement sensiblement vertical descendant F1, c'est-à-dire se rapproche du fond de la cuve 2A, de telle sorte que le premier organe de verrouillage 6, qui est solidaire dudit couvercle 3, voit son altitude diminuer jusqu'à ce qu'elle atteigne une seconde altitude h₆₂ inférieure à la première altitude h₆₁ et surtout inférieure à celle h₈ du second organe de verrouillage 8, ce dernier restant de préférence immobile à une altitude h₈ sensiblement constante.

En d'autres termes, grâce à la réaction du joint 10 au poids du couvercle 3, le premier organe de verrouillage 6 franchit avantageusement le seuil vertical formé par le second organe de verrouillage 8, ce qui le place automatiquement en situation de contourner l'obstacle initialement formé par ledit second organe de verrouillage 8 et plus particulièrement de s'engager sous ce dernier.

Avantageusement, la majorité sinon la totalité de la course utile C autorisée par le joint est obtenue par déflection élastique de la première lèvre 13 autour de sa racine 14, ladite déflexion ayant pour effet de réduire progressivement l'angle d'ouverture α et par conséquent la dimension d'interposition H selon laquelle le joint, sensiblement à la manière d'un coin ou d'une cale compressible, maintient l'écartement, ici non nul, entre le bord supérieur de la cuve 7 et le plat annulaire 3C du couvercle 3.

De façon particulièrement avantageuse, le joint d'étanchéité 10 contribue également au centrage du couvercle 3 sur la cuve, puisqu'il s'engage de façon sensiblement simultanée de part et d'autre du bord supérieur de cuve 7, la première lèvre 13 formant une sorte de tronc de cône de pénétration qui s'introduit à l'intérieur de la cuve 2 en glissant sur le rebord supérieur 7, tandis que l'excroissance de centrage 12 se maintient à l'extérieur dudit rebord supérieur 7, ledit rebord 7 s'enfonçant ainsi de préférence progressivement dans la zone de dégagement 16 prévue à cet effet.

Avantageusement, ce phénomène de centrage peut être renforcé lorsque le rebord supérieur 7 est incliné en pente douce vers l'intérieur de la cuve, tel que cela est illustré sur les figures 3 à 6.

De surcroît, la combinaison au sein d'un même joint d'étanchéité 10 particulièrement compact de moyens de centrage et de structures d'affaissement permettant audit joint de se contracter verticalement sous le poids du couvercle assure spontanément le positionnement convenable, de manière simultanée, de l'ensemble des organes de verrouillage 6, 8 répartis sur la périphérie du couvercle 3 et de la cuve 2.

En effet, le couvercle 3 adopte et conserve ainsi automatiquement une assiette sensiblement horizontale et équilibrée, adaptée à la manoeuvre des moyens de verrouillage 5, de telle sorte que, le couvercle se trouvant à une altitude appropriée et ne penchant sensiblement pas, chaque premier organe de verrouillage se trouve bel et bien pré-positionné sous le second organe de verrouillage qui lui correspond et qu'il n'est donc pas nécessaire que l'utilisateur contrôle une à une chaque paire de premier et second organes de verrouillage 6, 8 avant d'actionner la commande de fermeture.

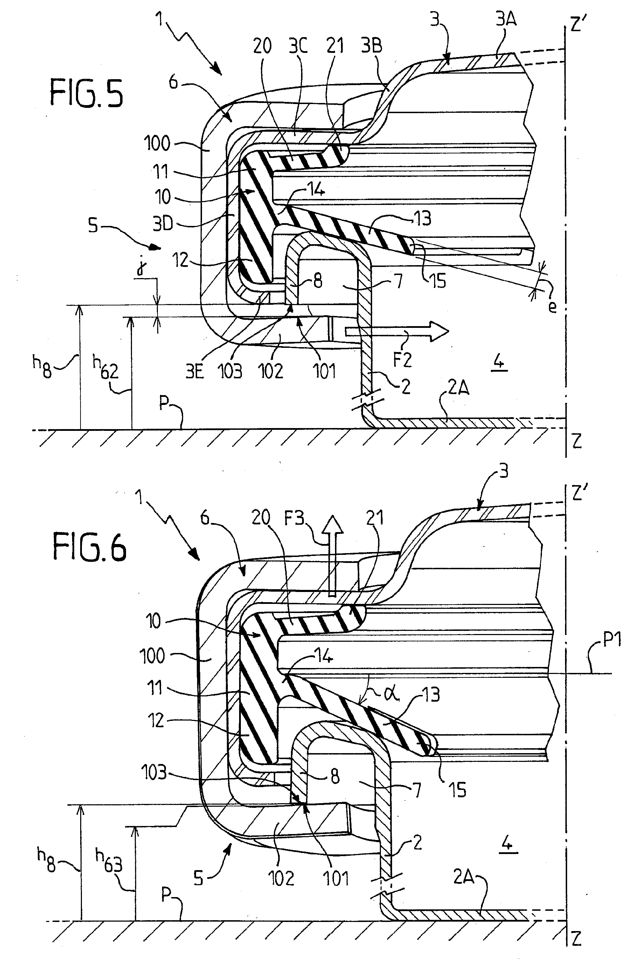

Une fois la mise en place spontanée du couvercle obtenu par relâchement de ce dernier et compression en douceur du joint d'étanchéité 10 qui adopte une configuration affaissée, l'utilisateur peut alors actionner les moyens de verrouillage 5, et plus particulièrement provoquer leur mouvement de fermeture F2, de sorte à les faire passer de leur état d'ouverture, illustré sur les figures 4 et 8, à leur état de fermeture, illustré sur les figures 5 et 9.

Selon le cas, cette opération reviendra soit à opérer un mouvement de rapprochement sensiblement horizontal et centripète des mâchoires 102, de préférence en translation, par exemple au moyen d'un pommeau de commande central, tel que cela est illustré sur la figure 5, soit à faire tourner le couvercle autour de son axe vertical (ZZ') à l'aide d'une poignée, afin d'amener par rotation les rampes de couvercle 201 en vis à vis des rampes de cuve 203 tel que cela est illustré sur la figure 9.

Dans tous les cas, le positionnement préalable des premiers organes de verrouillage 6 par rapport aux seconds organes de verrouillage 8 permet auxdits premiers organes de verrouillage 6 d'effectuer leur déplacement F2 sans être gênés par les seconds organes de verrouillage 8, dans la mesure où la mise en suspension du couvercle 3 a créé un jeu fonctionnel j qui permet auxdits premiers organes de verrouillage 6 de venir se glisser librement sous lesdits seconds organes de verrouillage 8, de manière sensiblement chevauchante et à l'aplomb de ces derniers.

Avantageusement, les moyens de verrouillage 5 de l'appareil de cuisson conforme à l'invention peuvent avantageusement être actionnés, tant à la fermeture qu'à l'ouverture, d'une part sans qu'il soit nécessaire que l'utilisateur appuie sur le couvercle 3 pour l'enfoncer d'avantage, puisque le jeu fonctionnel j requis pour la manoeuvre des premiers organes de verrouillage 6, et plus particulièrement pour le « claquement » des mâchoires, apparaît d'emblée, du simple fait de la pose du couvercle 3 sur la cuve 2, et d'autre part sans que les premiers organes de verrouillage 6 viennent au contact desdits seconds organes de verrouillage 8, et a *fortiori* sans que lesdits premiers organes de verrouillage 6 aient à exercer, lors de leur déplacement et de leur mise en place, une friction ou une contrainte quelconque à l'encontre desdits seconds organes de verrouillage 8, de la cuve 3, et/ou du joint 10.

L'utilisateur peut alors placer l'appareil 1 sur une source de chauffe de sorte à provoquer la montée en pression de l'enceinte de cuisson 4.

Il est remarquable que, ce faisant, le couvercle 3 peut se soulever légèrement sous l'effet de ladite pression, et rattraper le jeu fonctionnel j initialement autorisé pour permettre le passage des premiers organes de verrouillage 6 sous les seconds organes de verrouillage 8.

Ainsi, tel que cela est illustré sur les figures 6 et 10, lesdits premier et second organes de verrouillage se rapprochent pour venir au contact l'un de l'autre, les seconds organes de verrouillage 8 faisant alors office de butée à l'encontre des premiers organes de verrouillage 6 afin de retenir fermement le couvercle 3 contre la cuve.

Avantageusement, le joint d'étanchéité 10 se déforme alors pour passer d'une configuration affaissée à une configuration intermédiaire, en se re-déployant partiellement pour accompagner cette remontée du couvercle 3, tout en conservant l'étanchéité de l'enceinte de cuisson 4.

Plus particulièrement, le déplacement vertical ascendant F3 du couvercle 3, selon une course qui correspond sensiblement au jeu fonctionnel initial j, libère une partie des contraintes qui forçaient la flexion de la première lèvre 10, de telle sorte que celle-ci retrouve, par retour élastique, un angle d'ouverture α sensiblement supérieur à celui qu'elle présentait lorsque le couvercle était relâché, et sensiblement inférieur à celui qu'elle occupait au repos.

Pendant la phase de cuisson, les premiers moyens de verrouillage 6 occupent donc avantageusement une troisième altitude h₆₃ intermédiaire, comprise entre la première et la seconde altitude, et de préférence sensiblement égale à celle h₈ des seconds organes de verrouillage 8.

On observera également que, lors de ses mouvements alternés de flexion et de déflexion sous l'effet du poids du couvercle puis de la pression interne, la première lèvre 13 modifie sensiblement la position radiale de la zone de contact étanche qu'elle forme avec le rebord supérieur 7 de la cuve, ce dernier « *roulant* » en quelque sorte le long de la face inférieure de ladite lèvre 13 en éloignant, respectivement en rapprochant, ladite zone de contact du centre de la cuve au fur et à mesure du redressement, respectivement du basculement, de ladite lèvre.

En fin de cuisson, l'appareil est refroidi et/ou purgé de sa vapeur, de telle sorte que, le couvercle n'étant plus maintenu par la pression interne de l'enceinte de cuisson, celui-ci s'affaisse de nouveau pour retrouver la configuration qu'il occupait sur les figures 4, 5, 8 et 9. L'utilisateur peut alors actionner les moyens de verrouillage dans le sens de l'ouverture pour séparer le couvercle 3 de la cuve 2.

Bien entendu, il est également envisageable, sans sortir du cadre de l'invention, que le joint 10 soit logé à demeure sur la cuve 2 plutôt que sur le couvercle 3 et/ou que la première lèvre flexible 13 soit placée en position supérieure.

Avantageusement, le joint d'étanchéité 10 conforme à l'invention permet de conférer à l'appareil de cuisson 1 un comportement prévisible et reproductible, ainsi qu'une bonne ergonomie et une utilisation particulièrement intuitive et simple, puisqu'il suffit à l'utilisateur de positionner approximativement le couvercle sur la cuve pour être assuré du centrage convenable dudit couvercle, du pré-positionnement adéquat de l'ensemble des organes de verrouillage, et enfin de l'étanchéité de l'enceinte de cuisson 4.

En outre, les dispositions constructives décrites ci-dessus permettent avantageusement d'éviter que l'utilisateur n'exerce des contraintes excessives sur le joint ou sur les moyens de verrouillage au risque d'endommager l'appareil, de compromettre son étanchéité, voire de le renverser lors des manoeuvres d'ouverture et de fermeture.

Par conséquent, la présente invention améliore sensiblement la sécurité de fonctionnement et la longévité de l'appareil de cuisson 1.

### POSSIBILITE D'APPLICATION INDUSTRIELLE

L'invention trouve son application industrielle dans la conception et la fabrication d'autocuiseurs et de joints pour autocuiseurs.

## Revendications

1. Appareil de cuisson (1) d'aliments sous pression comprenant :
- une cuve (2) ainsi qu'un couvercle (3) destiné à être rapporté sur ladite cuve pour définir une enceinte de cuisson (4),
- des moyens de verrouillage (5) permettant de maintenir le couvercle sur la cuve, lesdits moyens de verrouillage comprenant au moins un premier organe de verrouillage (6) solidaire du couvercle (3) et au moins un second organe de verrouillage (8) solidaire de la cuve (2), le premier organe de verrouillage (6) étant destiné à être engagé sous le second organe de verrouillage (8), après que le couvercle (3) a été posé sur la cuve (2), pour assurer le maintien dudit couvercle sur ladite cuve,
- un joint d'étanchéité (10) conçu pour être interposé entre le couvercle (3) et la cuve (2) afin d'assurer l'étanchéité de l'enceinte de cuisson (4) et agencé pour coiffer le rebord supérieur (7) de la cuve, ledit joint d'étanchéité (10) étant conçu pour, lorsque le couvercle (3) accoste la cuve (2), venir tout d'abord au contact simultané dudit couvercle (3) et de ladite cuve (2) alors que le premier organe de verrouillage (6) se trouve à une première altitude (h₆₁) supérieure ou égale à l'altitude (h₈) du second organe de verrouillage (8), puis s'affaisser sous le seul poids du couvercle (3) de manière suffisante pour amener le premier organe de verrouillage (6) à une seconde altitude (h₆₂) inférieure à l'altitude (h₈) du second organe de verrouillage (8), ledit joint d'étanchéité (10) comprenant au moins une première lèvre (13) flexible faisant saillie à partir d'un talon (11) et dont la déformation permet l'affaissement du joint sous le poids du couvercle (3) et une seconde lèvre (20) qui fait saillie à partir du même talon (11) que la première lèvre (13) **caractérisé en ce que** la seconde lèvre (20) présente une rigidité à la déformation verticale plus élevée que ladite première lèvre (13).

2. Appareil selon la revendication 1 **caractérisé en ce que** le joint d'étanchéité est pourvu d'une excroissance de centrage (12) destinée à venir s'intercaler entre la partie latérale externe du rebord de cuve (7) et la face interne d'un bord tombé (3D) du couvercle (3).

3. Appareil selon la revendication 1 ou 2 **caractérisé en ce que** le talon (11) est périphérique et **en ce que** la première lèvre (13) flexible forme une jupe souple qui fait saillie depuis ledit talon (11) vers l'intérieur du joint (10).

4. Appareil selon l'une des revendications 1 à 3 **caractérisé en ce que** la première lèvre (13) présente une épaisseur (e) sensiblement comprise entre 1 mm et 3 mm, et de préférence voisine de 1,8 mm.

5. Appareil selon l'une des revendications 1 à 4 **caractérisé en ce que** la première lèvre (13) présente, lorsque le joint se trouve au repos, une structure sensiblement plane, qui est inclinée par rapport au plan horizontal (P1) du joint d'un angle d'ouverture (α) sensiblement compris entre 20 degrés et 50 degrés, et préférentiellement voisin de 35 degrés.

6. Appareil selon la revendication 2 et l'une des revendications 1 et 3 à 5 **caractérisé en ce que** la première lèvre (13) et l'excroissance de centrage (12) définissent une zone de dégagement (16) évasée dans laquelle vient se loger le rebord de cuve (7).

7. Appareil selon l'une des revendications précédentes **caractérisé en ce que** le joint d'étanchéité est agencé pour s'engager de façon simultanée de part et d'autre du rebord supérieur de cuve (7).

8. Appareil selon l'une des revendications précédentes **caractérisé en ce que** le joint d'étanchéité autorise une course verticale utile (C) du premier organe de verrouillage (6) sensiblement comprise entre 2 mm et 8 mm, et préférentiellement voisine de 5,5 mm.

9. Appareil selon l'une des revendications précédentes **caractérisé en ce que** le joint d'étanchéité est formé d'un seul tenant en silicone.

10. Appareil de cuisson d'aliments sous pression selon l'une des revendications précédentes **caractérisé en ce qu'**il est pourvu :
- soit de moyens de verrouillage à mâchoires (100), le premier organe de verrouillage (6) étant formé par la face supérieure (101) du bord inférieur rentrant (102) d'une mâchoire (100), et le second organe de verrouillage (8) étant formé par la face inférieure (103) du rebord de cuve (7) ou d'une rampe prévue à cet effet,
- soit de moyens de verrouillage à étrier, le premier organe de verrouillage (6) étant formé par la face supérieure de l'extrémité de l'étrier et le second organe de verrouillage (8) étant formé par la face inférieure de l'oreille de fixation sous laquelle l'extrémité de l'étrier peut être engagée,
- soit de moyens de verrouillage à baïonnette, le premier organe de verrouillage étant formé par la face supérieure (200) des tenons ou des rampes de couvercle (201) et le second organe de verrouillage (8) étant formé par la face inférieure (202) des rampes de cuve (203).

11. Appareil de cuisson d'aliments sous pression selon la revendication 10 **caractérisé en ce qu'**il comporte une pluralité de premiers et de seconds organes de verrouillage (6, 8) qui sont répartis autour dudit appareil et **en ce que** le joint d'étanchéité (10) permet l'affaissement simultané de l'ensemble des premiers organes de verrouillage (6) sous leurs seconds organes de verrouillage (8) respectifs.

## Patentansprüche

1. Druckgargerät (1) für Nahrungsmittel, umfassend:
- einen Behälter (2) sowie einen Deckel (3), der dazu bestimmt ist, auf den Behälter aufgesetzt zu werden, um einen Kochbereich (4) zu definieren,
- Verriegelungsmittel (5), die es ermöglichen, den Deckel auf dem Behälter zu halten, wobei die Verriegelungsmittel mindestens ein erstes Verriegelungselement (6), das mit dem Deckel (3) verbunden ist, und mindestens ein zweites Verriegelungselement (8), das mit dem Behälter (2) verbunden ist, umfassen, wobei das erste Verriegelungselement (6) dazu bestimmt ist, unter dem zweiten Verriegelungselement (8) in Eingriff zu gelangen, nachdem der Deckel (3) auf den Behälter (2) gelegt wurde, um den Halt des Deckels auf dem Behälter zu gewährleisten,
- eine Dichtung (10), die derart ausgeführt ist, dass sie zwischen dem Deckel (3) und dem Behälter (2) angeordnet ist, um die Dichtigkeit des Kochbereichs (4) zu gewährleisten, und die derart angeordnet ist, dass sie den oberen Rand (7) des Behälters bedeckt, wobei die Dichtung (10) derart ausgeführt ist, dass sie, wenn der Deckel (3) auf dem Behälter (2) zum Liegen kommt, zuerst in gleichzeitigen Kontakt mit dem Deckel (3) und dem Behälter (2) kommt, während sich das erste Verriegelungselement (6) in einer ersten Höhe (h₆₁) größer oder gleich der Höhe (h₈) des zweiten Verriegelungselements (8) befindet, dann nur unter dem Gewicht des Deckels (3) ausreichend einsinkt, um das erste Verriegelungselement (6) auf eine zweite Höhe (h₆₂) geringer als die Höhe (h₈) des zweiten Verriegelungselements (8) zu bringen, wobei die Dichtung (10) mindestens eine erste flexible Lippe (13), die aus einem Absatz (11) herausragt und deren Verformung das Einsinken der Dichtung unter dem Gewicht des Deckels (3) ermöglicht, und eine zweite Lippe (20) umfasst, die aus demselben Absatz (11) wie die erste Lippe (13) herausragt, **dadurch gekennzeichnet, dass** die zweite Lippe (20) eine höhere vertikale Verformungssteifigkeit als die erste Lippe (13) aufweist.

2. Gerät nach Anspruch 1, **dadurch gekennzeichnet, dass** die Dichtung mit einer Zentrierauskragung (12) versehen ist, die dazu bestimmt ist, zwischen dem äußeren seitlichen Teil des Behälterrandes (7) und der Innenseite eines Abfallsaums (3D) des Deckels (3) angeordnet zu werden.

3. Gerät nach Anspruch 1 oder 2, **dadurch gekennzeichnet, dass** der Absatz (11) in Umfangsrichtung angeordnet ist, und dass die erste flexible Lippe (13) eine weiche Schürze bildet, die vom Absatz (11) in das Innere der Dichtung (10) ragt.

4. Gerät nach einem der Ansprüche 1 bis 3, **dadurch gekennzeichnet, dass** die erste Lippe (13) eine Dicke (e) im Wesentlichen zwischen 1 mm und 3 mm und vorzugsweise nahe 1,8 mm aufweist.

5. Gerät nach einem der Ansprüche 1 bis 4, **dadurch gekennzeichnet, dass** die erste Lippe (13), wenn sich die Dichtung in Ruhestellung befindet, eine im Wesentlichen flache Struktur aufweist, die in Bezug zur Horizontalebene (P1) der Dichtung um einen Öffnungswinkel (α) im Wesentlichen zwischen 20 Grad und 50 Grad und vorzugsweise nahe 35 Grad geneigt ist.

6. Gerät nach Anspruch 2 und einem der Ansprüche 1 und 3 bis 5, **dadurch gekennzeichnet, dass** die erste Lippe (13) und die Zentrierauskragung (12) eine erweiterte ausgenommene Zone (16) definieren, in der der Behälterrand (7) angeordnet wird.

7. Gerät nach einem der vorhergehenden Ansprüche, **dadurch gekennzeichnet, dass** die Dichtung derart angeordnet ist, dass sie gleichzeitig beiderseits des oberen Behälterrandes (7) eingreift.

8. Gerät nach einem der vorhergehenden Ansprüche, **dadurch gekennzeichnet, dass** die Dichtung einen vertikalen Nutzhub (C) des ersten Verriegelungselements (6) im Wesentlichen zwischen 2 mm und 8 mm und vorzugsweise nahe 5,5 mm gestattet.

9. Gerät nach einem der vorhergehenden Ansprüche, **dadurch gekennzeichnet, dass** die Dichtung aus einem Stück aus Silikon gebildet ist.

10. Druckgargerät für Nahrungsmittel nach einem der vorhergehenden Ansprüche, **dadurch gekennzeichnet, dass** es umfasst:
- entweder Verriegelungsmittel mit Klemmbacken (100), wobei das erste Verriegelungselement (6) von der Oberseite (101) des unteren zurückgesetzten Randes (102) einer Klemmbacke (100) gebildet ist, und wobei das zweite Verriegelungselement (8) von der Unterseite (103) des Behälterrandes (7) oder einer zu diesem Zweck vorgesehenen Rampe gebildet ist,
- oder Verriegelungsmittel mit Bügel, wobei das erste Verriegelungsmittel (6) von der Oberseite des Endes des Bügels gebildet ist, und wobei das zweite Verriegelungselement (8) von der Unterseite der Befestigungsöse, unter der das Ende des Bügels in Eingriff gelangen kann, gebildet ist,
- oder Verriegelungsmittel mit Bajonett-Verschluss, wobei das erste Verriegelungselement von der Oberseite (200) der Deckelzapfen oder -rampen (201) gebildet ist, und wobei das zweite Verriegelungselement (8) von der Unterseite (202) der Behälterrampen (203) gebildet ist.

11. Druckgargerät für Nahrungsmittel nach Anspruch 10, **dadurch gekennzeichnet, dass** es eine Vielzahl von ersten und zweiten Verriegelungselementen (6, 8) umfasst, die um das Gerät verteilt sind, und dass die Dichtung (10) das gleichzeitige Einsinken der Gesamtheit der ersten Verriegelungsmittel (6) unter ihre jeweiligen zweiten Verriegelungsmittel (8) ermöglicht.

## Claims

1. Appliance (1) for cooking food under pressure, comprising:
- a vessel (2) and a lid (3) intended to be attached to said vessel in order to define a cooking chamber (4),
- locking means (5) for holding the lid on the vessel, said locking means comprising at least one locking member (6) secured to the lid (3) and at least a second locking member (8) secured to the vessel (2), the first locking member (6) being intended to be engaged under the second locking member (8), after the lid (3) has been placed on the vessel (2), to hold said lid on said vessel,
- a seal (10) designed to be interposed between the lid (3) and the vessel (2) in order to seal the cooking chamber (4) and arranged so as to fit on the top rim (7) of the vessel, said seal (10) being designed so as, when the lid (3) comes up against the vessel (2), to first of all come into simultaneous contact with said lid (3) and said vessel (2) while the first locking member (6) is situated at a first height (h₆₁) greater than or equal to the height (h₈) of the second locking member (8), and then to sink solely under the weight of the lid (3) sufficiently to bring the first locking member (6) to a second height (h₆₂) less than the height (h₈) of the second locking member (8), said seal (10) comprising at least one flexible first lip (13) projecting from a heel (11) and the deformation of which enables the seal to sink under the weight of the lid (3), and a second lip (20) that projects from the same heel (11) as the first lip (13), **characterised in that** the second lip (20) has rigidity under vertical deformation that is greater than said first lip (13).

2. Appliance according to claim 1, **characterised in that** the seal is provided with a centring protrusion (12) intended to come to be interposed between the external lateral part of the vessel rim (7) and the internal face of a dropped edge (3D) of the lid (3).

3. Appliance according to claim 1 or 2, **characterised in that** the heel (11) is peripheral and **in that** the flexible first lip (13) forms a flexible skirt that projects from said heel (11) towards the inside of the seal (10).

4. Appliance according to one of claims 1 to 3, **characterised in that** the first lip (13) has a thickness (e) substantially between 1 mm and 3 mm, preferably around 1.8 mm.

5. Appliance according to one of claims 1 to 4, **characterised in that** the first lip (13) has, when the seal is at rest, a substantially planar structure that is inclined with respect to the horizontal plane (P1) of the seal by an angle (α) substantially between 20 degrees and 50 degrees, and preferably around 35 degrees.

6. Appliance according to claim 2 and one of claims 1 and 3 to 5, **characterised in that** the first lip (13) and the centring protrusion (12) define a splayed clear zone (16) in which the vessel rim (7) comes to be housed.

7. Appliance according to one of the preceding claims, **characterised in that** the seal is arranged so as to engage simultaneously on either side of the vessel top rim (7).

8. Appliance according to one of the preceding claims, **characterised in that** the seal allows a useful vertical travel (C) of the first locking member (6) of substantially between 2 mm and 8 mm, and preferably around 5.5 mm.

9. Appliance according to one of the preceding claims, **characterised in that** seal is formed in a single piece from silicone.

10. Appliance for cooking food under pressure according to one of the preceding claims, **characterised in that** it is provided:
- either with locking means with jaws (100), the first locking member (6) being formed by the top face (101) of the re-entrant bottom edge (102) of a jaw (100), and a second locking member (8) being formed by the bottom face (103) of the vessel rim (7) or of a ramp provided for this purpose,
- or with locking means with a clamp, the first locking member (6) being formed by the top face of the end of the clamp and a second locking member (8) being formed by the bottom face of the fixing lug under which the end of the clamp can be engaged,
- or with bayonet-type locking means, the first locking member being formed by the top face (200) of the tenons or ramps of the lid (201) and the second locking member (8) being formed by the bottom face (202) of the vessel ramps (203).

11. Appliance for cooking food under pressure according to claim 10, **characterised in that** it comprises a plurality of first and second locking members (6, 8) that are distributed around said appliance and **in that** the seal (10) allows the simultaneous sinking of all the first locking members (6) under their respective second locking members (8).
